# EUROPEAN PATENT SPECIFICATION

(11) **EP 1 450 282 B1**
(45) Date of publication and mention of the grant of the patent: **27.09.2006**
(21) Application number: 03023527.9
(22) Date of filing: 15.10.2003
(51) Int. Cl.: G06Q 10/00

(54) **Personal information offering system and method thereof**
System und Verfahren zum Anbieten persönlicher Daten
Système et procédé pour offrir des données personnelles

(30) Priority: 21.10.2002 JP 2002305835
(43) Date of publication of application: 25.08.2004
(73) Proprietor: NEC CORPORATION, Tokyo (JP)
(72) Inventor: Morita, Shigeyoshi, Minato-ku Tokyo (JP)
(74) Representative: Glawe, Delfs, Moll

(56) References cited:
- US-A1- 2001 056 469
- US-A1- 2002 010 617
- US-A1- 2002 019 817
- US-A1- 2002 026 519
- US-A1- 2002 069 312

## Description

### BACKGROUND OF THE INVENTION

The present invention relates to a personal information offering system and a personal information offering method in which information communication terminals are used.

### Description of the Related Art

Generally, when a person met an unknown person for the first time, in order to make the unknown person know the person, there is a method that the person hands his/her business card to the unknown person. The business card has personal information such as the name, the address, the telephone number, the occupation, and the position in the organization of the person.

However, the business card must be printed beforehand, and it is difficult that the business card keeps the newest personal information. And in some cases, a person, who received the business card, cannot contact with another person whom the person gave the business card, because of the change of the telephone number or the address.

Moreover, the information has been described in the business card is only general information in a designated form. This information is not sufficient for informing his/her private information such as tastes and hobbies. On the contrary, in some cases, the information in the business card is too sufficient for some persons.

Further, when a person wants to change the contents of the personal information offering to other persons based on the relation with the persons, the person has to carry plural kinds of business cards. In case that the person has the plural kinds of business cards, the person may not recognize the shortage of some business cards.

In order to solve this problem, there are conventional technologies that manage the personal information on a network.

As the first conventional technology, Japanese Patent Application Laid-Open No. 2001-325151 discloses an information offering method, a data processing system, an upper data processing apparatus, and an information recording medium. In this patent application, a registration user terminal by which a user registers his/her personal information, an upper data processing apparatus (network server) to which the personal information is registered, a reference user terminal by which another user refers to the personal information of the user who registered the personal information are connected via a communication network.

The user of the registration user terminal registers the personal information in the network server. The network server generates identification (ID) information, a referring password, and a renewing password for the user when the user registered the personal information. And the network server gives the ID information, the referring password, and the renewing password to the user. The network server transmits the personal information of the user to the registration user terminal. When the user desires to renew his/her personal information, the user transmits the ID information and the renewing password to the network server, and renews the personal information and transmits the renewed personal information to the network server. And the network server renews the registered personal information of the user.

When another user of the reference user terminal desires to obtain the personal information of the user, the user gives the ID information and the referring password to another user. Another user transmits the ID information and the referring password to the network server. The network server receives the ID information and the referring password from the reference user terminal, and transmits the personal information of the user of the registration user terminal to the reference user terminal.

However, at the first conventional technology, the contents of the personal information do not teach, and only the method offering the personal information is described.

As the second conventional technology, Japanese Patent Application Laid-Open No. 2002-32372 discloses a management method, a management system, and a recording medium for personal information. In this patent application, a personal information management system, the Internet, and operating terminals are provided, and the operating terminals are connected to the personal information management system via the Internet. Each of the users of the operating terminals such as mobile communication terminals registers his/her personal information in the personal information management system.

The personal information management system registers the personal information and gives his/her own identification (ID) to each of the users. Each of the users attaches key information to the personal information depending on the levels of the personal information. In this patent application, the key information has several levels. For example, the level 1 information signifies basic information such as the name, the address, the occupation, and so on, the level 2 information signifies the telephone number, the date of birth, and so on, in addition to the level 1.

When a user A desires to obtain the personal information of a user B, the user A gives his/her key information to the user B, and receives some key information of the user B having some level. And the user A accesses the personal information management system with the user ID and the key information of the user B. With this, the personal information management system approves the user A to browse the personal information of the user B corresponding to the level of the key information that the user B gave the user A. And also each of the users can renew the personal information and also changes the levels of the key information.

However, at the second conventional technology, both of the users A and B must register in the personal information management system. And users, who did not register in the personal information management system, cannot obtain the personal information.

US5918009 discloses a server apparatus for providing information to at least a first receiver and a second receiver. The first receiver communicates his/her login ID and password to the second receiver through a secondary communication means such as telephone, facsimile, text-chat or Internet-phone.

### SUMMARY OF THE INVENTION

It is therefore an object of the present invention to provide a personal information offering system and a personal information offering method in which the personal information can be offered to any person who is selected by a person who registered his/her personal information and in which plural personal information of the person can be registered and one of the plural personal information can be offered by selecting one from the plural personal information.

According to a first aspect of the present invention, for achieving the object, there is provided a personal information offering system. The personal information offering system provides information communication terminals that are used by users, an information server in which personal information of the users are registered, and a communication network that connects the information communication terminals to the information server. And each of the information communication terminals provides a personal information registering means that registers his/her personal information in the information server via the communication network by using a password and attaching address information for the personal information, and a memorizing means that memorizes the password for connecting to the information server and the address information for the personal information that was approved by the information server at the time when each of the users of the information communication terminals registered his/her personal information in the information server. And the information server provides a database in which the password and the personal information with the address information that the information server approved are stored. And when a user of one of the information communication terminals desires to offer some personal information to another user of one of the information communication terminals, the user informs another user about the password and the address information, and another user connects to the information server by using the password and the address information and obtains the personal information of the user.

According to a second aspect of the present invention, in the first aspect, each of the users of the information communication terminals registers plural personal information, in which information items are different from each other, by attaching different individual address information to each of the plural personal information, the information server approves the different individual address information to each of the plural personal information, when the different individual address information is not equal to the address information that has been registered, each of the information communication terminals, which registered the plural personal information, memorizes the different individual address information, the information server also memorizes the plural personal information with the different individual address information. And when a user of one of the information communication terminals desires to offer some personal information to another user of one of the information communication terminals, the user selects one of the plural personal information and gives another user the address information of the selected personal information and the password, and another user connects to the information server by using the password and the address information of the selected personal information and obtains the selected personal information of the user.

According to a third aspect of the present invention, in the first aspect, the user of one of the information communication terminals communicates with another user of one of the information communication terminals via the communication network.

According to a fourth aspect of the present invention, in the first aspect, the user of one of the information communication terminals communicates with another user of one of the information communication terminals by using a short distance radio communication means.

According to a fifth aspect of the present invention, in the first aspect, the personal information includes at least one of letter and sign information, speech and sound information, and image information.

According to a sixth aspect of the present invention, for achieving the object, there is provided a personal information offering method. The personal information offering method provides the steps of, registering personal information in an information server via a communication network by using a password and attaching address information for the personal information, by each of users of information communication terminals, memorizing the password for connecting to the information server and the address information for the personal information that was approved by the information server at the time when each of the users of the information communication terminals registered the personal information in the information server, in the each of the information communication terminals, storing the password and the personal information with the address information that the information server approved, in the information server, informing another user about the password and the address information, when a user of one of the information communication terminals desires to offer some personal information to another user of one of the information communication terminals, and obtaining the personal information by another user by that another user connects the information server by using the password and the address information.

According to a seventh aspect of the present invention, in the sixth aspect, the personal information offering method further provides the steps of, registering plural personal information, in which information items are different from each other, by attaching different individual address information to each of the plural personal information, by each of the users of the information communication terminals, permitting the different individual address information to each of the plural personal information, by the information server, when the different individual address information is not equal to the address information that has been registered, memorizing the different individual address information of the plural personal information, by each of the information communication terminals, memorizing the plural personal information with the different individual address information, by the information server, selecting one of the plural personal information and giving another user the address information of the selected personal information and the password, by each of the users of the information communication terminals, when one of the users of the information communication terminals desires to offer some personal information to another user of one of the information communication terminals, and obtaining the selected personal information of the user by another user by connecting to the information server by using the password and the address information of the selected personal information.

According to an eighth aspect of the present invention, in the sixth aspect, the user of one of the information communication terminals communicates with another user of one of the information communication terminals via the communication network.

According to a ninth aspect of the present invention, in the sixth aspect, the user of one of the information communication terminals communicates with another user of one of the information communication terminals by using a short distance radio communication means.

According to a tenth aspect of the present invention, in the sixth aspect, the personal information includes at least one of letter and sign information, speech and sound information, and image information.

### BRIEF DESCRIPTION OF THE DRAWINGS

The objects and features of the present invention will become more apparent from the consideration of the following detailed description taken in conjunction with the accompanying drawings in which:
Fig. 1 is a diagram showing personal information offering system at an embodiment of the present invention;
Fig. 2 is a block diagram showing the structure of an information communication terminal shown in Fig. 1;
Fig. 3 is a block diagram showing the structure of an information server shown in Fig. 1;
Fig. 4 is diagrams showing personal information that is stored in a database in the information server shown in Fig. 3;
Fig. 5 is a diagram showing URL information on a display of the information communication terminal shown in Fig. 1; and
Fig. 6 is a flowchart showing the operation of a personal information offering method at the embodiment of the present invention.

### DESCRIPTION OF THE PREFERRED EMBODIMENT

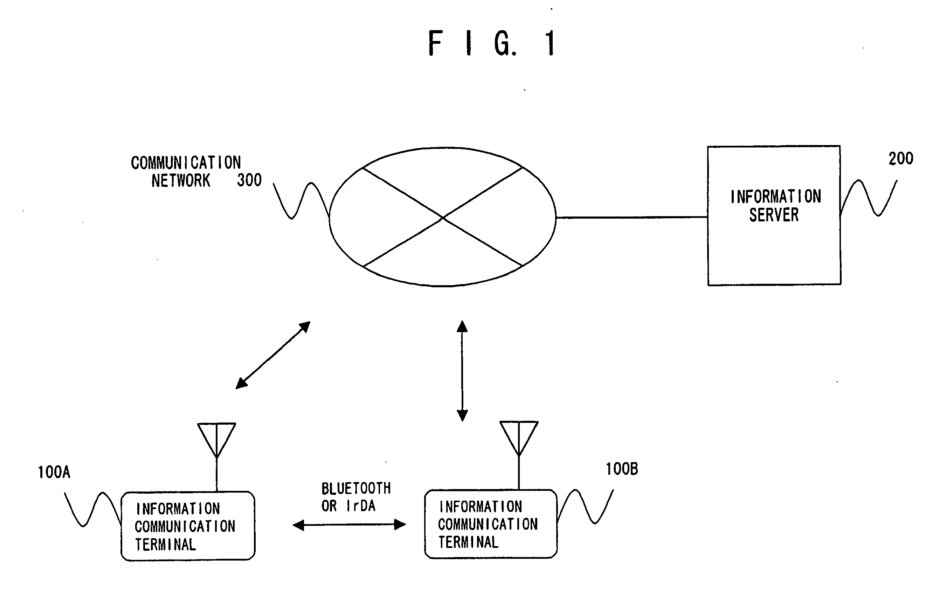

Referring now to the drawings, an embodiment of the present invention is explained in detail. Fig. 1 is a diagram showing personal information offering system at the embodiment of the present invention. As shown in Fig. 1, the personal information offering system at the embodiment of the present invention provides plural information communication terminals 100A and 100B, an information server 200, and a communication network 300. And the plural information communication terminal 100A and 100B are connected to the information server 200 via the communication network 300. In Fig. 1, two information communication terminals 100A and 100B are shown, however, the number of the information communication terminals is not limited to two, actually a large number of plural information communication terminals are connected to the information server 200 via the communication network 300. The communication network 300 is, for example, the Internet.

In the explanation of the embodiment of the present invention, in order to make the explanation concise, two information communication terminals 100A and 100B is used. And in some cases, each of the information communication terminals has only the reference number 100 instead of 100A or 100B.

Further, it is not necessary that the information communication terminals 100 are the same models, when the information communication terminals 100 have the same function that is mentioned later.

First, the information communication terminal 100 is explained in detail. As the information communication terminal 100, a mobile communication terminal, a note-type personal computer (PC), or personal digital assistants (PDA) can be used. The information communication terminal 100 can connect to the communication network 300 and has a function that can browse information via the communication network 300.

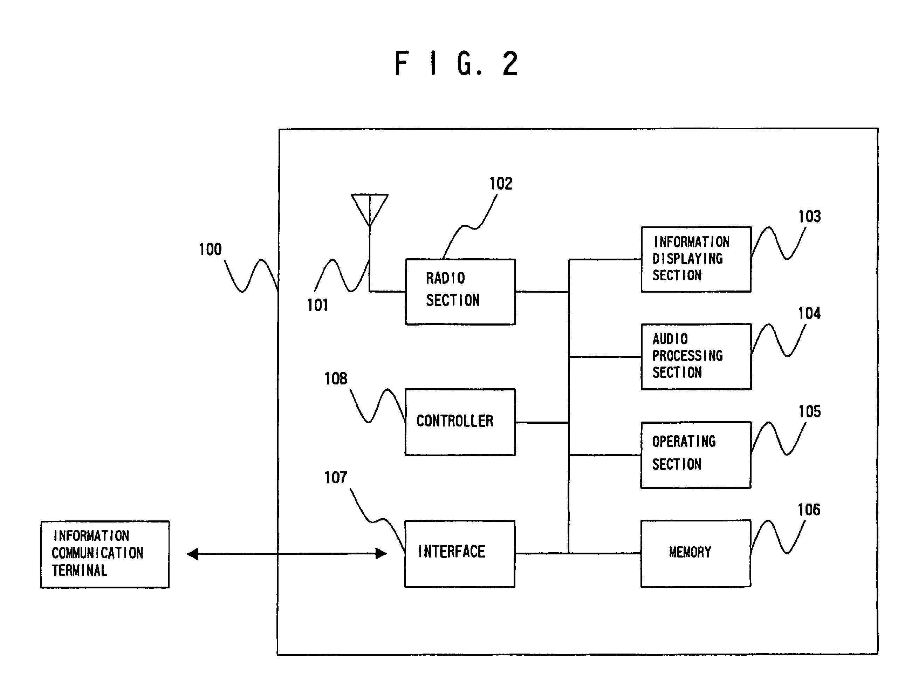

Fig. 2 is a block diagram showing the structure of the information communication terminal 100 shown in Fig. 1. As shown in Fig. 2, the information communication terminal 100 provides an antenna 101, a radio section 102, an information displaying section 103, an audio processing section 104, an operating section 105, a memory 106, an interface 107, and a controller 108.

The radio section 102 is a section that processes data transmitting from the antenna 101 and data received at the antenna 101, by connecting to the communication network 300 via the antenna 101, and includes a transmitting data and received data processing circuit. The data to be processed at the radio section 102 are data such as speech and sound data, letter and sign data, and image data. The information displaying section 103 processes the letter and sign data and the image data and makes the processed data display on a display (not shown). The audio processing section 104 processes the speech and sound data and makes a speaker (not shown) output the speech and sound, and also makes a microphone (not shown) input the speech and sound data.

The operating section 105 is a section by which the user of the information communication terminal 100 inputs various commands and information. The memory 106 stores various data. The interface 107 receives data from an external instrument and transmits data to the external instrument and controls the communication with the external instrument, based on standards such as the Bluetooth standard and the Infrared Data Association (IrDA) standard. At the explanation of the embodiment of the present invention, as the external instrument, an information communication terminal is used. The controller 108 controls each of the sections in the information communication terminal 100.

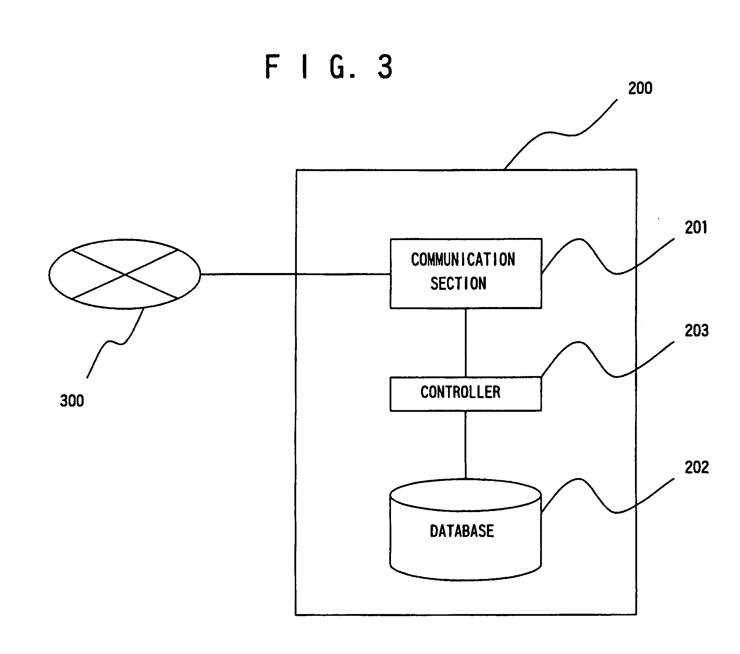

Second, the information server 200 is explained in detail. The information server 200 is a server such as a workstation, which processes information, and is managed by a personal information offering organization. Fig. 3 is a block diagram showing the structure of the information server 200 shown in Fig. 1. As shown in Fig. 3, the information server 200 provides a communication section 201, a database 202, and a controller 203.

The communication section 201 is a communication interface section at the time when the information server 200 transmits data to the communication network 300 and receives data from the communication network 300. The database 202 stores personal information data, which have been registered from the information communication terminals 100 and are offered to other information communication terminals 100 that requested to obtain the registered personal information. And also the database 202 stores authentication information that authenticates the information communication terminals 100 before the personal information is offered. The controller 203 controls each section in the information server 200.

Next, the operation of the personal information offering system is explained. Each of the users, who desire to register the personal information in the information server 200, accesses to the information server 200 via the communication network 300 and registers his/her personal information in the information server 200 by using a password (PW). At this time, each of the users attaches address information such a uniform resource locator (URL) to the personal information. The PW and the address information must be approved by the information server 200. When each of the users registered his/her personal information, the information server 200 gives an individual ID to each of the users. The registration of the personal information can be executed from the information communication terminal 100 or a PC of the user who desires to register his/her personal information.

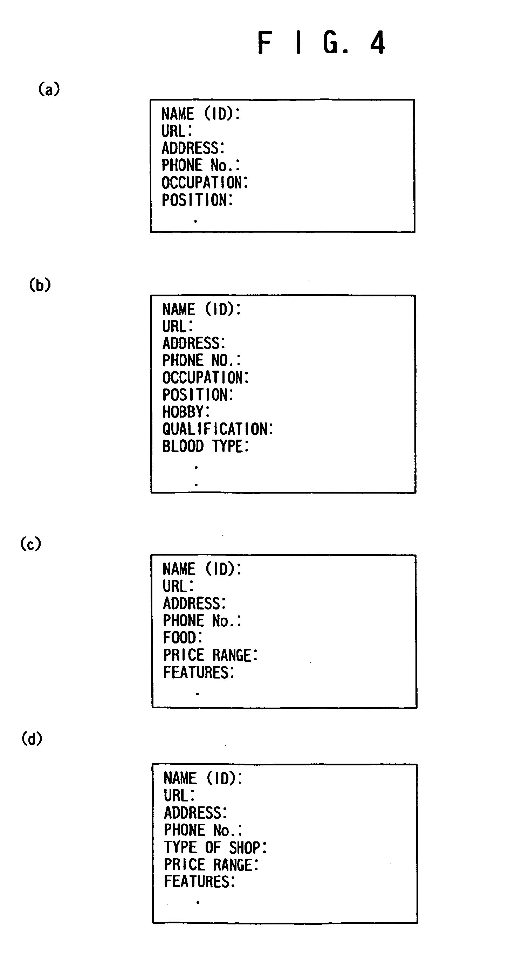

Fig. 4 is diagrams showing personal information that is stored in the database 202 shown in Fig. 3. In Fig. 4, (a) shows an example of basic personal information, (b) shows an example of detailed personal information, (c) shows an example of personal information of a restaurant registering by the restaurant, and (d) shows an example of personal information of a shop registering by the shop. In Fig. 4, items of the personal information are fixed, however, the organization managing the information server 200 can change the items. When the user desires to add or change the items, the user must propose the request and the organization managing the information server 200 finally decides.

In case of the restaurant is a Chinese noodle shop, the personal information includes the price range, the food (Chinese noodles), and features of the noodles such as the kinds of noodles, the kinds of soups, the quantity of the noodle. And in case of the shop is a beauty salon, the personal information includes the price range, the type of shop (beauty salon), the hairstyles, and the cutting methods and so on in the features.

When the information server 200 received the access from a user for the registration of the personal information, the information server 200 transmits the screens of the personal information shown in Fig. 4. And the information server 200 makes the screens display on the display of the information communication terminal 100 or the PC of the user. At this time, each item in the screens is blank except the ID, because, the ID is given from the information server 200.

The user inputs the personal information in each item and returns the screens to the information server 200 with the PW and the address information (URLs). At this time, it is necessary that the PW and the URLs are approved by the information server 200. The information server 200 registers the personal information in the database 202 with the PW and the URLs. The individual URL is attached to each of the plural personal information. The information communication terminal 100 stores the approved URLs and the PW in the memory 106. When a person desires to offer his/her personal information to another person, the person informs some URL with the PW to another person by selecting from the URLs.

When the user desires to change the contents in each item, the user accesses the information server 200 by using the ID and the PW and obtains the personal information shown in Fig. 4, and changes the contents and returns the changed contents to the information server 200.

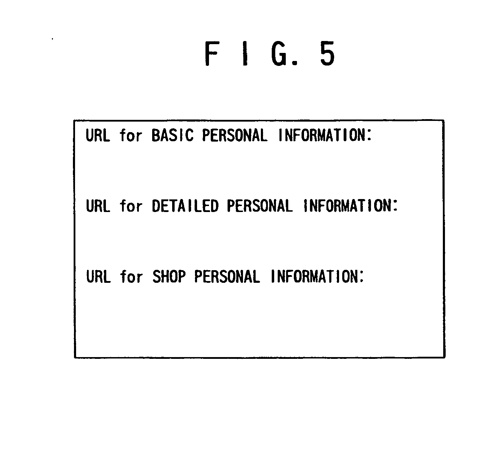

Fig. 5 is a diagram showing his/her own URL information on the display of the information communication terminal 100 shown in Fig. 1. In Fig. 5, an example of the URL information of a person who manages a shop is shown. That is, as the URL information, the basic personal information URL, the detailed personal information URL, and the personal information of the shop URL are shown in Fig. 5.

That is, the basic personal information URL is shown, for example, as http://www.personal information/k.yamada/b..., and the detailed personal information is shown, for example, as http://www.personal information/k.yamada/d..., and the shop personal information is shown, for example, as http://www.personal information/k.yamada/shop....

This URL information shown in Fig. 5 is used, when a person desires to offer some personal information to another person.

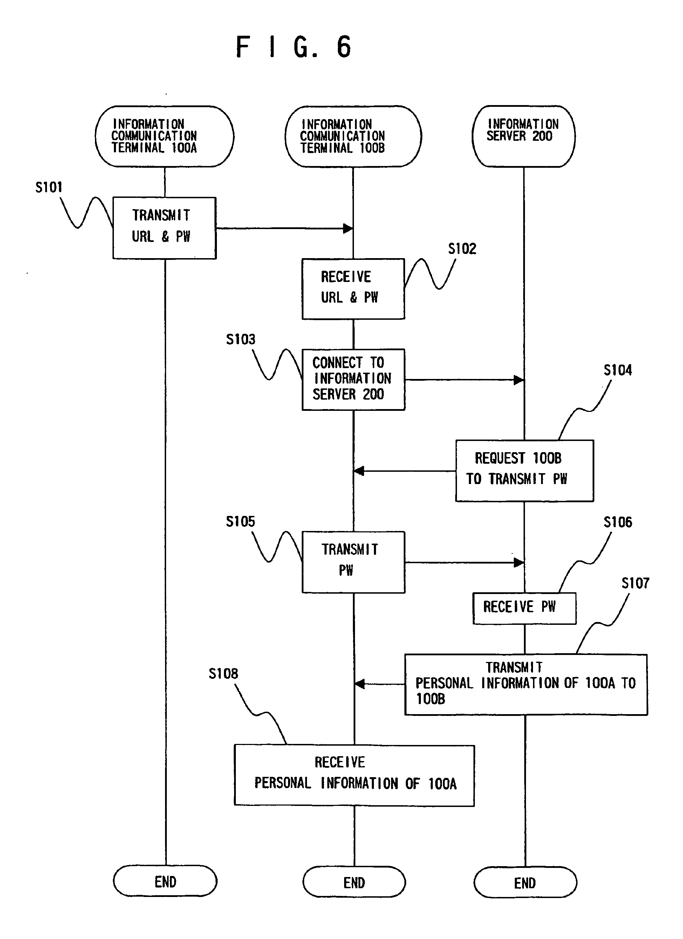

Next, referring to the drawings, the operation of a personal information offering method at the embodiment of the present invention is explained in detail. Fig. 6 is a flowchart showing the operation of the personal information offering method at the embodiment of the present invention. At the explanation of the personal information offering method shown in Fig. 6, it is assumed that the personal information has been registered in the information server 200.

In Fig. 6, the operation, in which the user of the information communication terminal 100A offers his/her personal information to the user of the information communication terminal 100B, is shown.

First, when a user A, who finished the registration of his/her personal information in the information server 200, met a user B, whom the user A desires to offer his/her personal information, the user A displays the URL information shown in Fig. 5 on the display of the information communication terminal 100A of the user A. And the user A selects some personal information having a URL, which the user A desires to inform to the user B. The user A transmits the URL information of the selected personal information to the information communication terminal 100B of the user B by using the information communication terminal 100A.

At this time, the URL information and the PW are transmitted to the information communication terminal 100B from the information communication terminal 100A via the communication network 300 or by using the function adopted the standard such as the Bluetooth standard and the IrDA standard (step S101). The PW is transmitted for authentication of the information communication terminal 100B, and by using the PW, the personal information of the information terminal 100A can be offered to the information communication terminal 100B.

The information communication terminal 100B receives the URL information and the PW (step S102). The information communication terminal 100B connects to the information server 200 by using the URL (step S103). The information server 200 requests the information communication terminal 100B to transmit the PW (step S104). The information communication terminal 100B transmits the PW (step S105). The information server 200 receives the PW and authenticates the PW (step S106). With this, the information server 200 transmits the personal information of the user A, designated by the URL information, to the information communication terminal 100B (step S107). The information communication terminal 100B receives the personal information (step S108), and outputs the personal information of the user A on the display of the information communication terminal 100B.

At the explanation mentioned above, the information communication terminal 1008 connected to the information server 200 by using the URL information. However, since the PW and the URL information are transmitted to the information server 200 at the same time, the information communication terminal 100B can also connect to the information server 200 by first using the PW, based on the authentication of the information server 200.

At the explanation mentioned above, as the personal information, the letter and sign information is used, however, the personal information is not limited to the letter and sign information, the speech and sound information and the image information can be used as the personal information.

As mentioned above, according to the present invention, the information communication terminals can communicate with each other via the communication network or by using the short distance radio communication means used the standard such as the Bluetooth standard and the IrDA standard. And a user of the information communication terminal can select another user whom the user desires to offer his/her personal information. With this, the user can easily offer his/her personal information to his/her desiring person by using the network.

Furthermore, the user can easily select the contents of the personal information that the user offers to another user. Therefore, the security of the personal information can be kept.

While the present invention has been described with reference to the particular illustrative embodiment, it is not to be restricted by that embodiment but only by the appended claims.

## Claims

1. A personal information offering system, comprising:
information communication terminals (100) that are used by users;
an information server (200) in which personal information of said users are registered; and
a communication network (300) that connects said information communication terminals (100) to said information server (200), wherein:
each of said information communication terminals (100) comprises:
a personal information registering means that is adapted to register his/her personal information in said information server (200) via said communication network (300) by using a password and attaching address information for said personal information; and
a memorizing means (106) that is adapted to memorize said password for connecting to said information server (200) and said address information for said personal information that was approved by said information server (200) at the time when each of said users of said information communication terminals (100) registered his/her personal information in said information server (200), and
an interface (107), which is adapted to communicate with another one of said information communication terminals (100) so that said memorized password and said memorized address information can be transferred;
said information server (200) comprises:
a database (202) in which said password and said personal information with said address information that said information server (200) approved are stored, and
said information server (200) is adapted to offer said personal information to one of said communication terminals (100) which requests said personal information provided that said information server (200) has obtained said password and said address information from said communication terminal (100).

2. A personal information offering system in accordance with claim 1, wherein:
said personal information registering means of said information communication terminals (100) is adapted to register plural personal information, in which information items are different from each other, by attaching different individual address information to each of said plural personal information,
said information server (200) is adapted to approve said different individual address information to each of said plural personal information, when said different individual address information is not equal to the address information that has been registered,
each of said information communication terminals (100), which registered said plural personal information, is adapted to memorize said different individual address information, and
said information server (200) is also adapted to memorize said plural personal information with said different individual address information.

3. A personal information offering system in accordance with claim 1, wherein:
one of said information communication terminals (100) is connected with another one of said information communication terminals (100) via said communication network (300).

4. A personal information offering system in accordance with claim 1, wherein:
one of said information communication terminals (100) is connected with another one of said information communication terminals (100) by a short distance radio communication means.

5. A personal information offering system in accordance with claim 1, wherein:
said personal information includes at least one of letter and sign information, speech and sound information, and image information.

6. A personal information offering method, comprising the steps of:
registering personal information in an information server (200) via a communication network (300) by using a password and attaching address information for said personal information, by each of users of information communication terminals (100);
memorizing said password for connecting to said information server (200) and said address information for said personal information that was approved by said information server (200) at the time when each of said users of said information communication terminals (100) registered said personal information in said information server (200), in said each of said information communication terminals (100);
storing said password and said personal information with said address information that said information server (200) approved, in said information server (200);
informing another user about said password and said address information by transmitting said memorized password and said memorized address information from an information communication terminal (100) of one user to an information communication terminals (100) of another user, when one user of one of said information communication terminals (100) desires to offer some personal information to another user of one of said information communication terminals (100); and
obtaining said personal information by another user by that another user connects said information server (200) by using said password and said address information.

7. A personal information offering method in accordance with claim 6, further comprising the steps of:
registering plural personal information, in which information items are different from each other, by attaching different individual address information to each of said plural personal information, by each of said users of said information communication terminals (100);
permitting said different individual address information to each of said plural personal information, by said information server (200), when said different individual address information is not equal to the address information that has been registered;
memorizing said different individual address information of said plural personal information, by each of said information communication terminals (100);
memorizing said plural personal information with said different individual address information, by said information server (200);
selecting one of said plural personal information and giving another user said address information of said selected personal information and said password, by each of said users of said information communication terminals (100), when one of said users of said information communication terminals (100) desires to offer some personal information to another user of one of said information communication terminals (100); and
obtaining said selected personal information of said user by another user by connecting to said information server (200) by using said password and said address information of said selected personal information.

8. A personal information offering method in accordance with claim 6, wherein:
said user of one of said information communication terminals (100) communicates with another user of one of said information communication terminals (100) via said communication network (200).

9. A personal information offering method in accordance with claim 6, wherein:
said user of one of said information communication terminals (100) communicates with another user of one of said information communication terminals (100) by using a short distance radio communication means.

10. A personal information offering method in accordance with claim 6, wherein:
said personal information includes at least one of letter and sign information, speech and sound information, and image information.

## Patentansprüche

1. Persönliches Informationsanbietesystem, welches umfasst:
Informationskommunikationsendgeräte (100), die von Nutzern verwendet werden;
einen Informationsserver (200), in welchem persönliche Informationen der Nutzer registriert sind; und
ein Kommunikationsnetzwerk (300), das die Informationskommunikationsendgeräte (100) mit dem Informationsserver (200) verbindet, wobei:
jedes der Informationskommunikationsendgeräte (100) umfasst:
ein persönliches Informationsregistrierungsmittel, das geeignet ist, seine/ihre persönlichen Informationen in dem Informationsserver (200) mittels des Kommunikationsnetzwerks (300) durch Verwendung eines Passworts und Anhängen von Adressinformationen für die persönlichen Informationen zu registrieren; und
ein Speichermittel (106), das geeignet ist, das Passwort zum Verbinden mit dem Informationsserver (200) und die Adressinformation für die persönlichen Informationen zu speichern, die durch den Informationsserver (200) zu dem Zeitpunkt, wenn jeder der Nutzer der Informationskommunikationsendgeräte (100) seine/ihre persönlichen Informationen in dem Informationsserver (200) registrierte, akzeptiert wurde, und
eine Schnittstelle (107), die geeignet ist, mit einem weiteren der Informationskommunikationsendgeräte (100) zu kommunizieren, so dass das gespeicherte Passwort und die gespeicherte Adressinformation übertragen werden kann;
wobei der Informationsserver (200) umfasst:
eine Datenbank (202), in der das Passwort und die persönlichen Informationen mit der Adressinformation, die der Informationsserver (200) akzeptierte, gespeichert sind, und
der Informationsserver (200) geeignet ist, die persönlichen Informationen einem der Informationskommunikationsendgeräte (100) anzubieten, das die persönlichen Informationen anfordert, vorausgesetzt, dass der Informationsserver (200) das Passwort und die Adressinformation von dem Kommunikationsendgerät (100) erhalten hat.

2. Persönliches Informationsanbietesystem gemäß Anspruch 1, wobei:
das persönliche Informationsregistrierungsmittel der Informationskommunikationsendgeräte (100) geeignet ist, mehrere persönliche Informationen, in welchen Informationseinheiten voneinander unterschiedlich sind, durch das Anhängen unterschiedlicher individueller Adressinformationen an jede der mehreren persönlichen Informationen zu registrieren,
der Informationsserver (200) geeignet ist, die unterschiedlichen individuellen Adressinformationen an jeder der mehreren persönlichen Informationen zu akzeptieren, wenn die unterschiedlichen individuellen Adressinformationen den Adressinformationen, die registriert worden sind, nicht gleichen,
jedes der Informationskommunikationsendgeräte (100), dass die mehreren persönlichen Informationen registrierte, geeignet ist, die unterschiedlichen individuellen Adressinformationen zu speichern, und
der Informationsserver (200) ebenfalls geeignet ist, die mehreren persönlichen Informationen mit den unterschiedlichen individuellen Adressinformationen zu speichern.

3. Persönliches Informationsanbietesystem gemäß Anspruch 1, wobei:
eines der Informationskommunikationsendgeräte (100) mit einem weiteren der Informationskommunikationsendgeräte (100) über das Kommunikationsnetzwerk (300) verbunden ist.

4. Persönliches Informationsanbietesystem gemäß Anspruch 1, wobei:
eines der Informationskommunikationsendgeräte (100) mit einem weiteren der Informationskommunikationsendgeräte (100) durch ein Kurzentfemungs-Funkkommunikationsmittel verbunden ist.

5. Persönliches Informationsanbietesystem gemäß Anspruch 1, wobei:
die persönlichen Informationen mindestens eine von Buchstaben- und Zeicheninformationen, Sprach- und Klanginformationen und Bildinformationen einschließen.

6. Persönliches Informationsanbieteverfahren, das die Schritte umfasst:
Registrieren von persönlichen Informationen in einem Informationsserver (200) mittels eines Kommunikationsnetzwerks (300) durch Verwendung eines Passworts und Anhängen von Adressinformationen für die persönlichen Informationen durch jeden der Nutzer von Informationskommunikationsendgeräten (100);
Speichern des Passworts zum Verbinden mit dem Informationsserver (200) und der Adressinformationen für die persönlichen Informationen, die durch den Informationsserver zu dem Zeitpunkt akzeptiert wurden, als jeder der Nutzer der Informationskommunikationsendgeräte (100) die persönlichen Informationen in dem Informationsserver (200) registrierte, in jedem der Informationskommunikationsendgeräte (100);
Speichern des Passworts und der persönlichen Informationen mit den Adressinformationen, die der Informationsserver (200) akzeptierte, in dem Informationsserver (200);
Informieren eines weiteren Nutzers über das Passwort und die Adressinformationen durch Übertragen des gespeicherten Passworts und der gespeicherten Adressinformationen von einem Informationskommunikationsendgerät (100) eines Nutzers zu einem Informationskommunikationsendgerät (100) eines weiteren Nutzers, wenn ein Nutzer des einen der Informationskommunikationsendgeräte (100) einige persönliche Informationen an einen weiteren Nutzer eines der Informationskommunikationsendgeräte (100) anzubieten wünscht; und
Erhalten der persönlichen Informationen durch einen weiteren Nutzer, indem der weitere Nutzer durch Verwendung des Passworts und der Adressinformationen mit dem Informationsserver (200) verbindet.

7. Persönliches Informationsanbieteverfahren gemäß Anspruch 6, das zusätzlich die Schritte umfasst:
Registrieren mehrerer persönlicher Informationen, in welchen Informationseinheiten voneinander unterschiedlich sind, durch Anhängen unterschiedlicher individueller Adressinformationen an jede der mehreren persönlichen Informationen durch jeden der Nutzer der Informationskommunikationsendgeräte (100);
Zulassen der unterschiedlichen individuellen Adressinformationen an jeder der mehreren persönlichen Informationen durch den Informationsserver (200), wenn die unterschiedlichen individuellen Adressinformationen nicht den Adressinformationen gleichen, die registriert worden sind;
Speichern der unterschiedlichen individuellen Adressinformationen der mehreren persönlichen Informationen durch jedes der Informationskommunikationsendgeräte (100);
Speichern der mehreren persönlichen Informationen mit den unterschiedlichen individuellen Adressinformationen durch den Informationsserver (200);
Auswählen einer der mehreren persönlichen Informationen und Geben der Adressinformationen der ausgewählten persönlichen Informationen und des Passworts an einen weiteren Nutzer durch jeden der Nutzer der Informationskommunikationsendgeräte (100), wenn einer der Nutzer der Informationskommunikationsendgeräte (100) einige persönliche Informationen an einen weiteren Nutzer eines der Informationskommunikationsendgeräte (100) anzubieten wünscht; und
Erhalten der ausgewählten persönlichen Informationen des Nutzers durch einen weiteren Nutzer durch Verbindung mit dem Informationsserver (200) durch Verwendung des Passworts und der Adressinformationen der ausgewählten persönlichen Informationen.

8. Persönliches Informationsanbieteverfahren gemäß Anspruch 6, wobei:
der Nutzer eines der Informationskommunikationsendgeräte (100) mit einem weiteren Nutzer eines der Informationskommunikationsendgeräte (100) über das Kommunikationsnetzwerk (200) kommuniziert.

9. Persönliches Informationsanbieteverfahren gemäß Anspruch 6, wobei:
der Nutzer eines der Informationskommunikationsendgeräte (100) mit einem weiteren Nutzer eines der Informationskommunikationsendgeräte (100) durch Verwendung eines Kurzentfernungs-Funkkommunikationsmittels kommuniziert.

10. Persönliches Informationsanbieteverfahren gemäß Anspruch 6, wobei:
die persönlichen Informationen mindestens eine von Buchstaben- und Zeicheninformationen, Sprach- und Klanginformationen und Bildinformationen einschließen.

## Revendications

1. Système pour offrir des informations personnelles, comprenant :
des terminaux de communication d'informations (100) qui sont utilisés par des utilisateurs ;
un serveur d'informations (200) dans lequel des informations personnelles desdits utilisateurs sont enregistrées ; et
un réseau de communication (300) qui connecte lesdits terminaux de communication d'informations (100) au dit serveur d'informations (200), dans lequel :
chacun desdits terminaux de communication d'informations (100) comprend :
des moyens d'enregistrement d'informations personnelles qui sont adaptés pour enregistrer ses informations personnelles dans ledit serveur d'informations (200) par le biais dudit réseau de communication (300) en utilisant un mot de passe et en attachant des informations d'adresse pour lesdites informations personnelles ; et
des moyens de mémorisation (106) qui sont adaptés pour mémoriser ledit mot de passe pour la connexion au dit serveur d'informations (200) et lesdites informations d'adresse pour lesdites informations personnelles qui ont été approuvées par ledit serveur d'informations (200) au moment où chacun desdits utilisateurs desdits terminaux de communication d'informations (100) a enregistré ses informations personnelles dans ledit serveur d'informations (200) ; et
une interface (107), qui est adaptée pour communiquer avec un autre desdits terminaux de communication d'informations (100), de telle sorte que ledit mot de passe mémorisé et lesdites informations d'adresse mémorisées puissent être transférés ;
ledit serveur d'informations (200) comprend :
une base de données (202) dans laquelle ledit mot de passe et lesdites informations personnelles avec lesdites informations d'adresse que ledit serveur d'informations (200) a approuvées sont enregistrés ; et
ledit serveur d'informations (200) est adapté pour offrir lesdites informations personnelles à un desdits terminaux de communication (100) qui demande lesdites informations personnelles à condition que ledit serveur d'informations (200) ait obtenu ledit mot de passe et lesdites informations d'adresse à partir dudit terminal de communication (100).

2. Système pour offrir des informations personnelles selon la revendication 1, dans lequel :
lesdits moyens d'enregistrement d'informations personnelles desdits terminaux de communication d'informations (100) sont adaptés pour enregistrer une pluralité d'informations personnelles, dans lesquelles des éléments d'information sont différents les uns des autres, en attachant des informations d'adresse individuelles différentes à chacune de ladite pluralité d'informations personnelles ;
ledit serveur d'informations (200) est adapté pour approuver lesdites informations d'adresse individuelles différentes par rapport à chacune de ladite pluralité d'informations personnelles, quand lesdites informations d'adresse individuelles différentes ne sont pas égales aux informations d'adresse qui ont été enregistrées ;
chacun desdits terminaux de communication d'informations (100), qui a enregistré ladite pluralité d'informations personnelles, est adapté pour mémoriser lesdites informations d'adresse individuelles différentes ; et
ledit serveur d'informations (200) est également adapté pour mémoriser ladite pluralité d'informations personnelles avec lesdites informations d'adresse individuelles différentes.

3. Système pour offrir des informations personnelles selon la revendication 1, dans lequel :
un desdits terminaux de communication d'informations (100) est connecté à un autre desdits terminaux de communication d'informations (100) par le biais dudit réseau de communication (300).

4. Système pour offrir des informations personnelles selon la revendication 1, dans lequel :
un desdits terminaux de communication d'informations (100) est connecté à un autre desdits terminaux de communication d'informations (100) par le biais de moyens de communication radio courte distance.

5. Système pour offrir des informations personnelles selon la revendication 1, dans lequel :
lesdites informations personnelles comprennent au moins une parmi des informations de lettre et de signe, des informations de parole et de son, et des informations d'image.

6. Procédé pour offrir des informations personnelles, comprenant les étapes consistant à :
enregistrer des informations personnelles dans un serveur d'informations (200) par le biais d'un réseau de communication (300) en utilisant un mot de passe et en attachant des informations d'adresse pour lesdites informations personnelles, par chacun des utilisateurs de terminaux de communication d'informations (100) ;
mémoriser ledit mot de passe pour la connexion au dit serveur d'informations (200) et lesdites informations d'adresse pour lesdites informations personnelles qui ont été approuvées par ledit serveur d'informations (200) au moment où chacun desdits utilisateurs desdits terminaux de communication d'informations (100) a enregistré lesdites informations personnelles dans ledit serveur d'informations (200), dans chacun desdits terminaux de communication d'informations (100) ;
stocker ledit mot de passe et lesdites informations personnelles avec lesdites informations d'adresse que ledit serveur d'informations (200) a approuvées, dans ledit serveur d'informations (200) ;
informer un autre utilisateur à propos dudit mot de passe et desdites informations d'adresse en transmettant ledit mot de passe mémorisé et lesdites informations d'adresse mémorisées depuis un terminal de communication d'informations (100) d'un utilisateur vers un terminal de communication d'informations (100) d'un autre utilisateur, quand un utilisateur de l'un desdits terminaux de communication d'informations (100) souhaite offrir certaines informations personnelles à un autre utilisateur de l'un desdits terminaux de communication d'informations (100) ; et
obtenir lesdites informations personnelles par un autre utilisateur du fait qu'un autre utilisateur se connecte au dit serveur d'informations (200) en utilisant ledit mot de passe et lesdites informations d'adresse.

7. Procédé pour offrir des informations personnelles selon la revendication 6, comprenant en outre les étapes consistant à :
enregistrer une pluralité d'informations personnelles, dans lesquelles des éléments d'information sont différents les uns des autres, en attachant des informations d'adresse individuelles différentes à chacune de ladite pluralité d'informations personnelles, par chacun desdits utilisateurs desdits terminaux de communication d'informations (100) ;
approuver lesdites informations d'adresse individuelles différentes par rapport à chacune de ladite pluralité d'informations personnelles, par ledit serveur d'informations (200) quand lesdites informations d'adresse individuelles différentes ne sont pas égales aux informations d'adresse qui ont été enregistrées ;
mémoriser lesdites informations d'adresse individuelles différentes de ladite pluralité d'informations personnelles, par chacun desdits terminaux de communication d'informations (100) ;
mémoriser ladite pluralité d'informations personnelles avec lesdites informations d'adresse individuelles différentes, par ledit serveur d'informations (200) ;
sélectionner une de ladite pluralité d'informations personnelles et donner à un autre utilisateur lesdites informations d'adresse parmi lesdites informations personnelles sélectionnées et ledit mot de passe, par chacun desdits utilisateurs desdits terminaux de communication d'informations (100), quand un desdits utilisateurs desdits terminaux de communication d'informations (100) souhaite offrir certaines informations personnelles à un autre utilisateur de l'un desdits terminaux de communication d'informations (100) ; et
obtenir lesdites informations personnelles sélectionnées dudit utilisateur par un autre utilisateur en se connectant au dit serveur d'informations (200) en utilisant ledit mot de passe et lesdites informations d'adresse desdites informations personnelles sélectionnées.

8. Procédé pour offrir des informations personnelles selon la revendication 6, dans lequel :
ledit utilisateur de l'un desdits terminaux de communication d'informations (100) communique avec un autre utilisateur de l'un desdits terminaux de communication d'informations (100) par le biais dudit réseau de communication (200).

9. Procédé pour offrir des informations personnelles selon la revendication 6, dans lequel :
ledit utilisateur de l'un desdits terminaux de communication d'informations (100) communique avec un autre utilisateur de l'un desdits terminaux de communication d'informations (100) en utilisant des moyens de communication radio courte distance.

10. Procédé pour offrir des informations personnelles selon la revendication 6, dans lequel :
lesdites informations personnelles comprennent au moins une parmi des informations de lettre et de signe, des informations de parole et de son, et des informations d'image.
